# EUROPÄISCHE PATENTSCHRIFT

(11) **EP 3 652 595 B1**
(45) Veröffentlichungstag und Bekanntmachung des Hinweises auf die Patenterteilung: **16.03.2022**
(21) Anmeldenummer: 18732770.5
(22) Anmeldetag: 20.06.2018
(51) Int. Cl.: G05B 19/042

(54) **VERFAHREN UND SYSTEM ZUM ÜBERWACHEN EINER ANLAGE DER AUTOMATISIERUNGSTECHNIK**
METHOD AND SYSTEM FOR MONITORING AN AUTOMATION SYSTEM
PROCÉDÉ ET SYSTÈME POUR SURVEILLER UNE INSTALLATION DE LA TECHNOLOGIE D'AUTOMATISATION

(30) Priorität: 11.07.2017 DE 102017115517
(43) Veröffentlichungstag der Anmeldung: 20.05.2020
(73) Patentinhaber: Endress+Hauser Process Solutions AG, 4153 Reinach (CH)
(72) Erfinder: MAYER, Michael, 4104 Oberwil (CH); PÖSCHMANN, Axel, 4057 Basel (CH)
(74) Vertreter: Andres, Angelika Maria
(86) Internationale Anmeldenummer: PCT/EP2018/066381
(87) Internationale Veröffentlichungsnummer: WO 2019/011603

(56) Entgegenhaltungen:
- EP-A2- 2 660 667
- DE-A1-102005 051 580
- DE-A1-102014 119 515

## Beschreibung

Die Erfindung umfasst ein Verfahren zum Überwachen einer Anlage der Automatisierungstechnik, in welcher zumindest ein Feldgerät eingesetzt ist. Des Weiteren umfasst die Erfindung eine Datenumsetzungseinheit zum Durchführen des erfindungsgemäßen Verfahrens.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Im Zuge der Industrie 4.0 werden die von den Feldgeräten erzeugten Daten auch häufig direkt aus dem Feld mithilfe sogenannter Datenumsetzungseinheiten, welche beispielsweise als "Edge Devices" oder "Cloud Gateways" bezeichnet werden, erhoben und automatisiert an eine zentrale cloudfähige Datenbank übermittelt, auf welcher sich eine Applikation befindet. Auf diese Applikation, welche unter anderem Funktionen zur Visualisierung und weiteren Bearbeitung der auf der Datenbank gespeicherten Daten bietet, kann von einem Benutzer mittels Internet zugegriffen werden.

Typischerweise werden die erhobenen Daten von den Datenumsetzungseinheiten an verschiedene Datenbanken übermittelt. Hierbei handelt es sich meistens um eigene Datenbanken des jeweiligen Herstellers einer Datenumsetzungseinheit. Ein Datenaustausch zwischen den verschiedenen Datenbanken ist daher oftmals nicht möglich oder gewünscht. Daher existieren auf dem Markt viele verschiedene Implementierungen - Synergieeffekte sind sehr schwer bis gar nicht erreichbar.

Die DE 10 2014 119515 A1 umfasst ein Verfahren, welches ein Feldgerät mit einem implementierten ersten Server (C1) und einer internen Datenbank beschreibt. Über eine Bedieneinheit kann sich ein Bediener mit dem ersten Server verbinden. Der erste Server stellt eine Verbindung zu einem zweiten Server her. Die Abrufbefehle des Bedieners werden dadurch durch das Feldgerät hindurch zu dem zweiten Server getunnelt, so dass das Daten von dem zweiten Server auf das Bediengerät geladen werden können.

Die DE 10 2005 051580 A1 offenbart ein Kommunikationsmodul , welches dazu ausgestaltet ist, Daten eines Feldgeräts über ein erstes Interface zu erfassen, zu konvertieren und an eine cloudfähige Datenbank zu übertragen.

Die EP 2 660 667 A2 offenbart ein Cloud Gateway, welches unter anderem eine Transformationskomponente aufweist und mit einer cloudfähigen Datenbank verbunden werden kann.

Ausgehend von dieser Problematik liegt der Erfindung die Aufgabe zugrunde, ein Verfahren vorzustellen, welches eine konsistente Verwaltung von Daten mehrerer zueinander nicht kompatibler cloudfähiger Datenbanken erlaubt.

Die Aufgabe wird durch ein Verfahren gemäß Anspruch 1 gelöst.

Der große Vorteil des erfindungsgemäßen Verfahrens besteht darin, dass Daten von der ersten Datenbank zur zweiten Datenbank übermittelt werden können, obwohl die Datenbanken verschiedene Datenkonfigurationen aufweisen. Die zweite Datenbank muss hierbei nicht speziell konfiguriert werden, da die Datenumsetzungseinheit wie ein herkömmliches Edge Device, welches sich in einer Anlage befindet, kommuniziert. Mittels der zweiten Datenbank kann daher ein Zugriff auf Daten eines Feldgeräts erfolgen, obwohl die zweite Datenbank selbst nicht mit dem Feldgerät verbunden ist.

Als "cloudfähig" wird eine Datenbank im Sinne der Erfindung verstanden, wenn diese von einem Benutzer über das Internet kontaktiert werden kann. Es kann hierbei vorgesehen sein, dass die Datenbank eine Applikation aufweist, beispielsweise zum Visualisieren von feldgerätespezifischen Daten, welche auf der Datenbank abgelegt sind, oder zum Konfigurieren der Datenbank, beispielsweise zum Festlegen und Auswählen von Geräten, im Sinne der Erfindung Datenumsetzungseinheiten, welche der Datenbank Daten bereitstellen, welche diese speichert. Ein Benutzer kann per Internet von seinem Gerät, beispielsweise einem PC oder einem mobilen Endgerät, auf die Applikation der Datenbank zugreifen.

Feldgeräte, welche im Zusammenhang mit dem erfindungsgemäßen Verfahren erwähnt werden, wurden bereits im einleitenden Teil der Beschreibung beispielhaft aufgeführt.

Erfindungsgemäß ist vorgesehen, dass die Feldgeräte-bezogenen Daten mittels einer zweiten Datenumsetzungseinheit, welches sich insbesondere in der Anlage befindet, gesammelt werden, an die erste Datenbank übermittelt werden und in der ersten Datenbank gespeichert werden. Für gewöhnlich muss diese Datenumsetzungseinheit in der auf der ersten Datenbank befindlichen Applikation ausgewählt werden, damit dessen Daten auf der ersten Datenbank gespeichert werden. Für die erste Datenumsetzungseinheit, welche auf der zweiten Datenbank "registriert" wird, gilt analog dasselbe. Für die Datenbanken ist es nicht ersichtlich, von welcher Quelle eine Datenumsetzungseinheit ihre jeweiligen Daten bezieht.

Gemäß einer vorteilhaften Weiterbildung des erfindungsgemäßen Verfahrens ist vorgesehen, dass das Verfahren weiter die folgenden Verfahrensschritte umfasst:
Anlage 2
- Abrufen von zumindest einem Teil der auf der zweiten Datenbank enthaltenen und nicht, oder zu Teilen, auf der ersten Datenbank enthaltenen Daten mittels der Datenumsetzungseinheit;
- Umwandeln der abgerufenen Daten in ein zur ersten Datenkonfiguration kompatibles Format; und
- Speichern der konvertierten Daten auf der ersten Datenbank.

Das erfindungsgemäße Verfahren kann somit bidirektional genutzt werden. Hierfür muss die erste Datenumsetzungseinheit sowohl an der ersten, als auch an der zweiten Datenbank ausgewählt, bzw. registriert werden.

Erfindungsgemäß ist vorgesehen, dass die zweite Datenbank mit einem Feldgerät einer zweiten Anlage der Prozessautomatisierung in Kommunikationsverbindung gebracht wird und wobei zumindest ein Teil der von der ersten Datenbank abgerufenen Daten zur Bedienung des Feldgeräts verwendet wird. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden. Das Verfahren erlaubt daher beispielsweise eine Parametrierung eines Feldgerätes mit Daten, die aus der ersten Datenbank stammen. Gemäß einer vorteilhaften Ausgestaltung des erfindungsgemäßen Verfahrens ist vorgesehen, dass die auf der ersten und der zweiten Datenbank befindlichen Daten derart mittels der Datenumsetzungseinheit synchronisiert werden, insbesondere in wiederkehrenden, definierten Zeitabständen, so dass nach Abschluss eines Synchronisierungsvorgangs die Datenbanken über einen im Wesentlichen identischen Datenbestand verfügen. Für einen Benutzer wird dadurch der Bedienkomfort erhöht. Benutzt er mehrere Datenbanken, so muss er lediglich auf eine einzige zugreifen, um auf seinen gesamten Datenbestand zugreifen zu können. Es ist außerdem sichergestellt, dass der Datenbestand aktuell ist.

Des Weiteren wird die Aufgabe durch ein System gemäß Anspruch 4 gelöst.

Gemäß einer bevorzugten Weiterbildung der erfindungsgemäßen Datenumsetzungseinheit ist vorgesehen, dass die erste Datenumsetzungseinheit dazu ausgestaltet ist, zumindest einen Teil der auf der ersten Datenbank enthaltenen Daten abzurufen und aktiv alle Änderungen zu den auf der zweiten Datenbank enthaltenen Daten und/oder noch nicht auf der zweiten Datenbank enthaltenen Daten auf die zweite Datenbank zu übertragen. Die Datenübertragung wird dadurch aktiv durch die Datenumsetzungseinheit getrieben, indem diese die Daten in die zweite Datenbank pusht. Die zweite Datenbank ruft daher nicht etwa aktiv Daten über die Datenumsetzungseinheit ab, sondern bekommt die Daten automatisch geliefert.

In einer vorteilhaften Ausgestaltung der ersten Variante der erfindungsgemäßen Datenumsetzungseinheit ist vorgesehen, dass die erste Datenumsetzungseinheit als Applikation auf der ersten Datenbank oder der zweiten Datenbank implementiert und ausführbar ist. Auch in diesem Fall muss diese Datenumsetzungseinheit in der auf der ersten Datenbank befindlichen Applikation ausgewählt werden, damit deren erhobene Daten auf der ersten Datenbank gespeichert werden. Für die Datenbank ist es hierbei nicht ersichtlich, dass es sich um eine virtuelle Datenumsetzungseinheit handelt.

In einer zweiten Variante der erfindungsgemäßen Datenumsetzungseinheit ist vorgesehen, dass die erste Datenumsetzungseinheit als physische Datenumsetzungseinheit ausgestaltet ist. "Physisch" bedeutet, dass es sich bei der Datenumsetzungseinheit um ein handhabbares Gerät handelt, welches zumindest ein Elektronikmodul aufweist, mit dessen Hilfe die Daten von der ersten Datenbank abgerufen, konvertiert und an die zweite Datenbank übermittelt werden.

In einer vorteilhaften Weiterbildung der zweiten Variante der erfindungsgemäßen Datenumsetzungseinheit ist vorgesehen, dass die erste Datenumsetzungseinheit eine erste Schnittstelle und n weitere Schnittstellen aufweist, wobei die erste Schnittstelle über ein erstes Kommunikationsnetzwerk mit zumindest einer ersten Datenbank verbindbar ist und wobei die n-te Schnittstelle über ein n-tes Kommunikationsnetzwerk mit zumindest einer n-ten Datenbank verbindbar ist, wobei n ≥ 2. Das erfindungsgemäße Verfahren kann hierbei mittels der Datenumsetzungseinheit mit jeder der Datenbanken durchgeführt werden, so dass die zweite Datenbank zumindest einen Teil des jeweiligen Datenbestands von jeder der Datenbanken übermittelt bekommt.

Die Erfindung wird anhand der nachfolgenden Figuren näher erläutert. Es zeigen
- Fig 1:: ein erstes Ausführungsbeispiel des erfindungsgemäßen Verfahrens; und
- Fig. 2:: ein zweites Ausführungsbeispiel des erfindungsgemäßen Verfahrens.

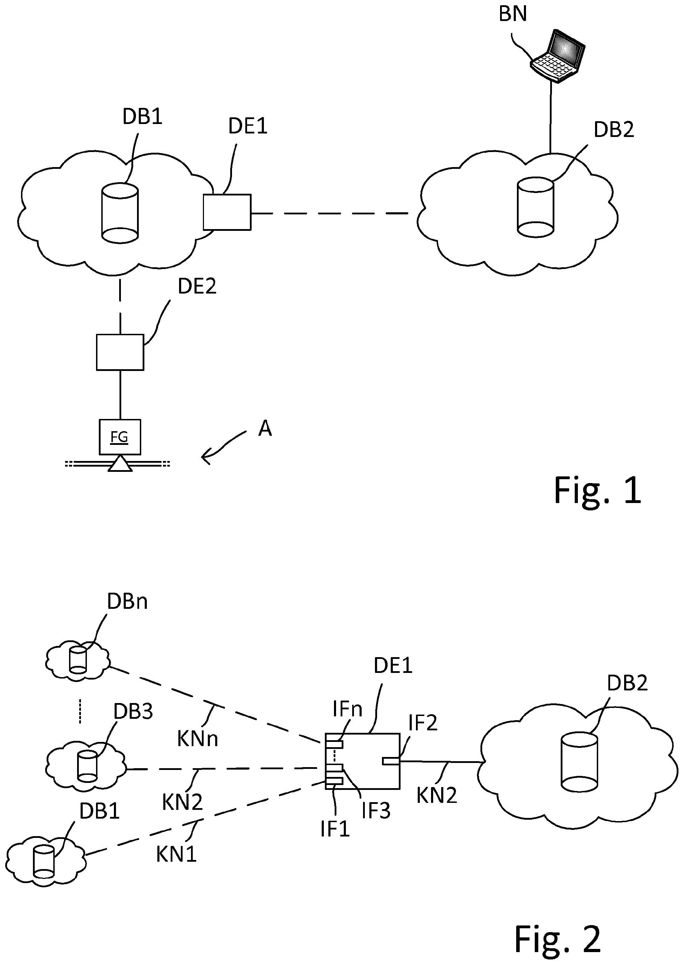

Fig. 1 zeigt ein erstes Ausführungsbeispiel des erfindungsgemäßen Verfahrens. In einer Anlage A der Prozessautomatisierung ist ein Feldgerät FG angeordnet. Dieses Feldgerät FG dient zur Erfassung einer physikalischen Messgröße und zur Umwandlung der erfassten Messgröße in einen Messwert. Beispiele für solche Feldgeräte FG sind bereits im einleitenden Teil der Beschreibung beispielhaft genannt worden. Das Feldgerät FG ist über eine Kommunikationsschnittstelle mit einem hier nicht gezeigten Feldbus verbunden, über welchen es die erzeugten Messwerte an die Leitwarte der Anlage A übermittelt. Zusätzlich ist das Feldgerät FG mit einer Datenumsetzungseinheit, hier als zweite Datenumsetzungseinheit DE 2 bezeichnet, verbunden. Die Verbindung mit der Datenumsetzungseinheit erfolgt entweder über eine separate Kommunikationsschnittstelle des Feldgeräts FG oder via des Feldbusses.

Bei der zweiten Datenumsetzungseinheit DE2 handelt es sich insbesondere um ein Edge Device oder ein Cloud Gateway. In regelmäßigen Zeitabständen erhebt die zweite Datenumsetzungseinheit DE2 Daten des Feldgeräts FG. Hierbei kann es sich um die erzeugten Messwerte, aber auch um Diagnosemeldungen, Parametereinstellungen und/oder Identifikationsdaten handeln.

Die erhobenen feldgerätebezogenen Daten werden mittels des Internets oder eines privaten Netzwerks an eine erste Datenbank DB1 übermittelt. Die Verbindung erfolgt beispielsweise drahtgebunden, oder drahtlos, beispielsweise über eine mobile Datenverbindung wie GSM, UMTS, LTE, oder Vergleichbarem. Damit die Daten auf der ersten Datenbank DB1 abgelegt werden, muss die zweite Datenumsetzungseinheit DE2 in der ersten Datenbank DB1 registriert werden. Dies erfolgt mittels einer Applikation, welche auf der ersten Datenbank DB1 abläuft. Hierfür greift ein Benutzer BN via Internet oder eines privaten Netzwerks auf die Applikation der ersten Datenbank DB1 zu.

Die übermittelten Daten werden anschließend auf der ersten Datenbank DB1 gespeichert. Das Speichern erfolgt auf Basis einer ersten Datenkonfiguration. Eine Datenkonfiguration legt das Dateiformat der gespeicherten Daten, bzw. deren Semantik und/oder Regeln zur Organisation und/oder zum Ablegen der Daten auf der ersten Datenbank DB1 fest. Der Benutzer BN kann anschließend auf die Daten zugreifen, indem er sich beispielsweise mit der Applikation der ersten Datenbank DB1 verbindet.

Neben dem abgebildeten Teil der Anlage A mit dem Feldgerät FG kann der Benutzer BN über eine Vielzahl weiterer Anlagenteile und Feldgeräte verfügen. Unter Umständen benutzen diese einen anderen Typ von Feldbus, welcher nicht zu der zweiten Datenumsetzungseinheit DE2 kompatible ist, oder sind auf andere Art und Weise, beispielsweise aufgrund der geographischen Lage, nicht mit der zweiten Datenumsetzungseinheit DE2 verbindbar, so dass weitere Datenumsetzungseinheiten vonnöten sind. Sind diese weiteren Datenumsetzungseinheiten von einem anderen Hersteller, so werden die von diesen erhobenen Daten unter anderem in andere Datenbanken als in die erste Datenbank DB1 gespeichert, welche weiteren Datenbanken unter Umständen keinen Datenaustausch ermöglichen. Von Seiten des Benutzers BN besteht daher Bedarf, die Datenbestände aller seiner Feldgeräte in einer einzigen Datenbank zu sammeln.

In dem in Fig. 1 gezeigten Ausführungsbeispiel werden auf der ersten Datenbank DB1 gespeicherte Daten mittels des erfindungsgemäßen Verfahrens auf eine zweite Datenbank DB2 transferiert. Die zweite Datenbank DB2 weist hierbei eine zur ersten Datenkonfiguration nicht kompatible zweite Datenkonfiguration auf. Weitere, hier nicht gezeigte, Feldgeräte können, beispielsweise mittels weiteren Datenumsetzungseinheiten, oder auf direktem Wege, mit der zweiten Datenbank DB2 verbunden sein, wobei deren Daten auf der zweiten Datenbank gespeichert werden.

Als Lösung wird auf der ersten Datenbank DB1 eine virtuelle Datenumsetzungseinheit, hier als erste Datenumsetzungseinheit DE1 bezeichnet, implementiert. Diese ist als Softwareapplikation ausgestaltet und läuft in der Applikation der ersten Datenbank DB2, auf welcher der Benutzer BN zugreifen kann, ab. Die erste Datenumsetzungseinheit DE1 wird wie obig beschrieben in der zweiten Datenbank DB2 registriert.

Zu vorgegebenen Zeitpunkten erhebt die erste Datenumsetzungseinheit DE1 nun Daten aus der ersten Datenbank DB1. Die erste Datenumsetzungseinheit DE kennt hierfür die erste Datenkonfiguration der ersten Datenbank DB1. Die erhobenen Daten werden anschließend in das Format der zweiten Datenkonfiguration konvertiert und von der ersten Datenumsetzungseinheit DE1 an die zweite Datenbank DB2 übermittelt, welche die Daten anschließend speichert. Die Übermittelung erfolgt über das Internet oder über ein privates Netzwerk. Die Daten werden dabei so gespeichert, als wenn diese direkt aus dem Feld von einer Datenumsetzungseinheit erhoben worden wären, da es für die zweite Datenbank DB2 nicht ersichtlich ist, von welcher Quelle eine Datenumsetzungseinheit ihre jeweiligen Daten bezieht.

Der Benutzer BN kann anschließend mittels der Applikation der zweiten Datenbank DB2 auf die Daten des Feldgeräts FG zugreifen. Es kann auch vorgesehen sein, dass, im Falle dass die zweite Datenbank DB2 mit einem weiteren Feldgerät verbunden ist, dieses weitere Feldgerät mit den Daten des Feldgeräts FG parametriert wird, wenn diese beispielsweise in einer ähnlichen Messstelle eingesetzt sind. Daten aus verschiedenen Anlagenteilen können also auf einfach Art und Weise untereinander ausgetauscht und verwendet werden.

Das erfindungsgemäße Verfahren erlaubt außerdem den umgekehrten Weg, so dass Daten von der zweiten Datenbank DB2 erhoben und an die erste Datenbank DB1 übermittelt werden. Es kann auch vorgesehen sein, die erste und die zweite Datenbank DB1, DB2 mittels der ersten Datenumsetzungseinheit DE1 zu synchronisieren.

Mittels des erfindungsgemäßen Verfahrens ist es außerdem möglich, die Daten einer Vielzahl von Datenbanken DB1, DB3, ..., DBn auf einer Datenbank DB2 zu sammeln. Fig. 2 zeigt diesen Anwendungsfall. Die erste Datenumsetzungseinheit DE1 ist hierbei als physisches Gerät ausgestaltet. Diese weist eine Vielzahl von Kommunikationsschnittstellen IF1, IF2, IF3, ..., IFn auf, welches über ein korrespondierendes Kommunikationsnetzwerk KN1, KN2, KN3, ..., KNn mit den einzelnen Datenbanken DB1, DB2, DB3, ..., DBn verbunden sind.

Alternativ kann vorgesehen sein, dass ein einzelnes Kommunikationsnetzwerk verwendet wird, beispielsweise das Internet, über welches die erste Datenumsetzungseinheit DE1 die Datenbanken DB1, DB2, DB3, ..., DBn kontaktieren kann. Die Kommunikationsschnittstellen IF1, IF2, IF3, ..., IFn sind in diesem Fall als softwareseitige Kommunikationsschnittstellen ausgestaltet.

Die erste Datenumsetzungseinheit DE1 ist hierbei in der Lage, jede von den Datenbanken DB1, DB2, DB3, ..., DBn verwendete Datenkonfiguration zu verstehen und Daten in ein anderes der von den Datenkonfigurationen verwendetes Format zu konvertieren.

Die unter Fig. 1 aufgeführten Verfahrensschritte werden analog in dem in Fig. 2 gezeigten Anwendungsbeispiel für eine oder mehrere Datenbanken DB1, DB3, ..., DBn ausgeführt.

Es versteht sich von selbst, dass die erste Datenumsetzungseinheit DE1 auch in diesem Anwendungsbeispiel als virtuelle Datenumsetzungseinheit ausgestaltet sein kann. Genauso ist es möglich, dass die in dem unter Fig. 1 beschriebenen Ausführungsbeispiel genannte erste Datenumsetzungseinheit DE1 als physisches Gerät ausgestaltet sein kann.

### Bezugszeichenliste

- A: Anlage der Automatisierungstechnik
- BN: Benutzer
- DB1, DB2, ..., DBn: Datenbanken
- DE1, DE2: Datenumsetzungseinheit
- FG: Feldgerät
- IF1, IF2, ..., IFn: Schnittstellen
- KN1, KN2, ..., KNn: Kommunikationsnetzwerke

## Patentansprüche

1. Verfahren zum Überwachen einer Anlage (A) der Automatisierungstechnik, in welcher zumindest ein Feldgerät (FG) eingesetzt ist,
wobei eine erste cloudfähige Datenbank (DB1) eine erste Datenkonfiguration aufweist und Feldgeräte-bezogene Daten, umfassend Messwerte, Parameterwerte, Identifikationsdaten und/oder Diagnosestatus des Feldgeräts (FG), enthält, wobei die Feldgeräte-bezogenen Daten mittels einer zweiten Datenumsetzungseinheit (DE2) gesammelt werden, an die erste Datenbank (DB1) übermittelt werden und in der ersten Datenbank (DB1) gespeichert werden,
wobei eine zweite cloudfähige Datenbank (DB2) eine zur ersten Datenkonfiguration nichtkompatible zweite Datenkonfiguration aufweist,
wobei die zweite Datenbank (DB2) mit einem zweiten Feldgerät einer zweiten Anlage der Prozessautomatisierung in Kommunikationsverbindung gebracht ist, und
wobei die erste und die zweite Datenkonfiguration das Dateiformat der Daten, bzw. deren Semantik und/oder Regeln zur Organisation und/oder zum Ablegen der Daten in der jeweiligen ersten oder zweiten Datenbank (DB1, DB2) definiert, umfassend:
- Abrufen von zumindest einem Teil der auf der ersten Datenbank (DB1) enthaltenen Daten mittels einer ersten Datenumsetzungseinheit (DE1);
- Konvertieren der abgerufenen Daten in ein zur zweiten Datenkonfiguration konformes Format;
- Übermitteln der konvertierten Daten an die zweite Datenbank (DB2) mittels der ersten Datenumsetzungseinheit (DE1);
- Speichern der konvertierten Daten auf der zweiten Datenbank (DB2);
- Zugreifen auf die Daten des zweiten Feldgeräts mittels einer Applikation der zweiten Datenbank (DB2); und
- Bedienen des zweiten Feldgeräts der zweiten Anlage vermittels zumindest eines Teils der von der ersten Datenbank (DB1) abgerufenen Daten, wobei das Bedienen ein Updaten des zweiten Feldgeräts, und/oder ein Abfragen und Visualisieren von Prozessdaten und/oder Diagnosedaten des zweiten Feldgeräts umfasst.

2. Verfahren nach Anspruch 1, weiter umfassend:
- Abrufen von zumindest einem Teil der auf der zweiten Datenbank (DB2) enthaltenen und nicht, oder zu Teilen, auf der ersten Datenbank (DB1) enthaltenen Daten mittels der ersten Datenumsetzungseinheit (DE1);
- Umwandeln der abgerufenen Daten in ein zur ersten Datenkonfiguration kompatibles Format; und
- Speichern der konvertierten Daten auf der ersten Datenbank (DB1).

3. Verfahren nach Anspruch 1, wobei die auf der ersten und der zweiten Datenbank (DB1, DB2) befindlichen Daten derart mittels der ersten Datenumsetzungseinheit (DE1) synchronisiert werden, so dass nach Abschluss eines Synchronisierungsvorgangs die Datenbanken (DB1) über einen im Wesentlichen identischen Datenbestand verfügen.

4. System, ausgestaltet zum Ausführen eines Verfahrens nach zumindest einem der Ansprüche 1 bis 3, umfassend eine erste cloudfähige Datenbank (DB1), eine zweite cloudfähige Datenbank (DB2), eine erste Datenumsetzungseinheit (DE1) und eine zweite Datenumsetzungseinheit.

5. System nach Anspruch 4, wobei die erste Datenumsetzungseinheit (DE1) dazu ausgestaltet ist, zumindest einen Teil der auf der ersten Datenbank (DB1) enthaltenen Daten abzurufen und aktiv alle Änderungen zu den auf der zweiten Datenbank (DB2) enthaltenen Daten und/oder noch nicht auf der zweiten Datenbank (DB2) enthaltenen Daten auf die zweite Datenbank (DB2) zu übertragen.

6. System nach Anspruch 4 oder 5, wobei die erste Datenumsetzungseinheit (DE1) als Applikation auf der ersten Datenbank (DB1) oder der zweiten Datenbank (DB2) implementiert und ausführbar ist.

7. System nach Anspruch 4 oder 5, wobei die erste Datenumsetzungseinheit (DE1) als physische Datenumsetzungseinheit ausgestaltet ist.

8. System nach Anspruch 7, wobei die erste Datenumsetzungseinheit (DE1) eine erste Schnittstelle (IF1) und n weitere Schnittstellen (IF2, IF3, ..., IFn) aufweist, wobei die erste Schnittstelle (IF1) über ein erstes Kommunikationsnetzwerk (KN1) mit zumindest einer ersten Datenbank (DB1) verbindbar ist und wobei die n-te Schnittstelle (IF2, IF3, ..., IFn) über ein n-tes Kommunikationsnetzwerk (KN1, KN2, ..., KN3) mit zumindest einer n-ten Datenbank (DB2, DB3, ..., DBn) verbindbar ist, wobei n ≥ 2.

## Claims

1. Procedure for monitoring an installation (A) used in automation technology,
wherein at least one field device (FG) is used in said installation,
wherein a first cloud-enabled database (10) has a first data configuration and contains field device-related data, comprising measured values, parameter values, identification data and/or a diagnostic status of the field device (FG), wherein the field device-related data are collected by a second data conversion unit (DE2), transmitted to the first database (DB1) and saved in the first database (DB1),
wherein a second cloud-enabled database (DB2) has a second data configuration that is incompatible with the first data configuration,
wherein the second database (DB2) is connected for communication with a second field device of a second installation used in automation engineering, and wherein the first and the second data configuration defines the file format of the data, or the data's semantics and/or rules for the organization and/or storage of the data in the first or second database (DB1, DB2), wherein said procedure comprises the following steps:
- Retrieval of at least some of the data contained in the first database (DB1) by means of a first data conversion unit (DE1);
- Conversion of the retrieved data to a format that complies with the second data configuration;
- Transmission of the converted data to the second database (DB2) by means of the first data conversion unit (DE1);
- Storage of the converted data in the second database (DB2);
- Access to the data of the second field device by means of an application of the second database (DB2); and
- Operation of the second field device of the second installation using at least some of the data retrieved from the first database (DB1), wherein the operation comprises the updating of the second field device, and/or the interrogation and visualization of process data and/or diagnostic data of the second field device.

2. Procedure as claimed in Claim 1, further comprising the following steps:
- Retrieval of at least some of the data contained and not contained in the second database (DB2), or of some of the data contained in the first database (DB1) by means of the first data conversion unit (DE1);
- Conversion of the data retrieved into a format compatible with the first data configuration; and
- Storage of the converted data in the first database (DB1).

3. Procedure as claimed in Claim 1,
wherein the data in the first and the second database (DB1, DB2) are synchronized by means of the first data conversion unit (DE1) in such a way that on completion of a synchronization procedure, the databases (DB1) have an essentially identical repository of data.

4. System designed to perform a procedure as claimed in at least one of the Claims 1 to 3, wherein said system comprises a first cloud-enabled database (10), a second cloud-enabled database (DB2), a first data conversion unit (DE1) and a second data conversion unit.

5. System as claimed in Claim 4, wherein the first data conversion unit (DE1) is configured to retrieve at least some of the data contained in the first database (DB1) and to actively transfer all the modifications concerning the data contained in the second database (DB2) and/or the data not yet contained in the second database (DB2) to the second database (DB2).

6. System as claimed in Claim 4 or 5, wherein the first data conversion unit (DE1) is implemented and can be executed as an application on the first database (DB1) or the second database (DB2).

7. System as claimed in Claim 4 or 5, wherein the first data conversion unit (DE1) is designed as a physical data conversion unit.

8. System as claimed in Claim 7, wherein the first data conversion unit (DE1) comprises a first interface (IF1) and n other interfaces (IF2, IF3, ..., IFn), wherein the first interface (IF1) can be connected to at least a first database (DB1) by means of a first communication network (KN1) and the nth interface (IF2, IF3, ..., IFn) can be connected to at least an nth database (DB2, DB3, ..., DBn) by means of an nth communication network (KN1, KN2, ..., KN3), wherein n is ≥ 2.

## Revendications

1. Procédé destiné à la surveillance d'une installation (A) de la technique d'automatisation, installation dans laquelle est utilisé au moins un appareil de terrain (FG),
procédé pour lequel une première base de données (DB1) compatible avec le cloud présente une première configuration de données et contient des données relatives à l'appareil de terrain, comprenant des valeurs mesurées, des valeurs de paramètres, des données d'identification et/ou un état de diagnostic de l'appareil de terrain (FG), les données relatives à l'appareil de terrain étant collectées au moyen d'une deuxième unité de conversion de données (DE2), transmises à la première base de données (DB1) et mémorisées dans la première base de données (DB1),
une deuxième base de données (DB2) compatible avec le cloud présentant une deuxième configuration de données incompatible avec la première configuration de données,
la deuxième base de données (DB2) étant mise en liaison de communication avec un deuxième appareil de terrain d'une deuxième installation de la technique d'automatisation, et
la première et la deuxième configuration de données définissant le format de fichier des données, ou leur sémantique et/ou des règles pour l'organisation et/ou le stockage des données dans la première ou deuxième base de données (DB1, DB2) respective, lequel procédé comprend les étapes suivantes :
- Récupération d'au moins une partie des données contenues dans la première base de données (DB1) au moyen d'une première unité de conversion de données (DE1) ;
- Conversion des données récupérées dans un format conforme à la deuxième configuration de données ;
- Transmission des données converties à la deuxième base de données (DB2) au moyen de la première unité de conversion de données (DE1) ;
- Stockage des données converties dans la deuxième base de données (DB2) ;
- Accès aux données du deuxième appareil de terrain au moyen d'une application de la deuxième base de données (DB2) ; et
- Commande du deuxième appareil de terrain de la deuxième installation au moyen d'au moins une partie des données récupérées dans la première base de données (DB1), la commande comprenant une mise à jour du deuxième appareil de terrain, et/ou une interrogation et une visualisation de données de process et/ou de données de diagnostic du deuxième appareil de terrain.

2. Procédé selon la revendication 1, comprenant en outre les étapes suivantes :
- Récupération, au moyen de la première unité de conversion de données (DE1), au moins d'une partie des données contenues dans la deuxième base de données (DB2) et non contenues, ou en partie, dans la première base de données (DB1) ;
- Conversion des données récupérées dans un format compatible avec la première configuration de données ; et
- Stockage des données converties dans la première base de données (DB1).

3. Procédé selon la revendication 1,
pour lequel les données se trouvant sur la première et la deuxième base de données (DB1, DB2) sont synchronisées au moyen de la première unité de conversion de données (DE1), de telle sorte qu'à l'issue d'une opération de synchronisation, les bases de données (DB1) disposent d'un ensemble de données sensiblement identique.

4. Système conçu pour la réalisation d'un procédé selon au moins l'une des revendications 1 à 3, lequel système comprend une première base de données (DB1) compatible avec le cloud, une deuxième base de données (DB2) compatible avec le cloud, une première unité de conversion de données (DE1) et une deuxième unité de conversion de données.

5. Système selon la revendication 4, pour lequel la première unité de conversion de données (DE1) est configurée pour récupérer au moins une partie des données contenues dans la première base de données (DB1) et pour transférer activement vers la deuxième base de données (DB2) toutes les modifications concernant les données contenues dans la deuxième base de données (DB2) et/ou les données non encore contenues dans la deuxième base de données (DB2).

6. Système selon la revendication 4 ou 5, pour lequel la première unité de conversion de données (DE1) est implémentée et peut être exécutée en tant qu'application sur la première base de données (DB1) ou la deuxième base de données (DB2).

7. Système selon la revendication 4 ou 5, pour lequel la première unité de conversion de données (DE1) est conçue comme une unité de conversion de données physique.

8. Système selon la revendication 7, pour lequel la première unité de conversion de données (DE1) comprend une première interface (IF1) et n autres interfaces (IF2, IF3, ..., IFn), la première interface (IF1) pouvant être connectée à au moins une première base de données (DB1) par l'intermédiaire d'un premier réseau de communication (KN1) et la énième interface (IF2, IF3, ..., IFn) pouvant être connectée à au moins une énième base de données (DB2, DB3, ..., DBn) par l'intermédiaire d'un énième réseau de communication (KN1, KN2, ..., KN3), n étant ≥ 2.
